# EUROPÄISCHE PATENTSCHRIFT

(11) **EP 2 934 797 B1**
(45) Veröffentlichungstag und Bekanntmachung des Hinweises auf die Patenterteilung: **08.11.2023**
(21) Anmeldenummer: 13811241.2
(22) Anmeldetag: 20.12.2013
(51) Int. Cl.: B23B 31/113, B23B 51/04, E21B 17/046, B28D 1/04

(54) **SCHNEIDABSCHNITT**
CUTTING PORTION FOR A DRILL BIT
SÉGMENT DE COUPE POUR UNE COURONNE DE FORAGE

(30) Priorität: 21.12.2012 WO PCT/EP2012/076774; 08.05.2013 EP 13166989
(43) Veröffentlichungstag der Anmeldung: 28.10.2015
(73) Patentinhaber: Hilti Aktiengesellschaft, 9494 Schaan (LI)
(72) Erfinder: HOOP, Matthaeus, FL-9492 Eschen (LI)
(74) Vertreter: Hilti Aktiengesellschaft Corporate Intellectual Property
(86) Internationale Anmeldenummer: PCT/EP2013/077684
(87) Internationale Veröffentlichungsnummer: WO 2014/096359

(56) Entgegenhaltungen:
- EP-A1- 0 909 870
- EP-B1- 0 477 253
- DE-A1- 10 357 505
- DE-A1- 19 654 597
- DE-B4- 19 654 597
- GB-A- 2 251 046
- JP-A- H0 475 812
- JP-A- 2002 120 218
- JP-U- S59 105 311
- US-A- 3 888 320
- US-A1- 2007 020 056

## Beschreibung

### Technisches Gebiet

Die vorliegende Erfindung betrifft einen Schneidabschnitt für eine Bohrkrone gemäß dem Oberbegriff des Anspruchs 1.

### Stand der Technik

US 3,888,320 A offenbart einen Schneidabschnitt, der über eine lösbare Steck-Dreh-Verbindung mit einem Bohrschaftabschnitt zu einer Bohrkrone verbindbar ist. Die Bohrkrone wird in der Werkzeugaufnahme eines Kernbohrgerätes befestigt und im Bohrbetrieb vom Kernbohrgerät in einer Drehrichtung um eine Drehachse angetrieben. Der Schneidabschnitt umfasst einen Ringabschnitt, mehrere Schneidelemente, die an einem ersten Ende mit dem Ringabschnitt verbunden sind, und ein äußeres Steckelement, das an einem, den Schneidelementen abgewandten, zweiten Ende mit dem Ringabschnitt verbunden ist. Der Bohrschaftabschnitt umfasst einen zylinderförmigen Bohrschaft, der an einem, dem Schneidabschnitt zugewandten Ende ein inneres Steckelement aufweist. Das innere und äußere Steckelement bilden in einer Steckrichtung parallel zur Drehachse eine Steckverbindung. Das äußere Steckelement weist an der Innenseite mehrere Stiftelemente auf, die in einer Ebene senkrecht zur Drehachse radial nach innen gerichtet sind. Das innere Steckelement weist mehrere schlitzförmige Ausnehmungen in L-Form auf, in die die Stiftelemente eingeführt werden. Die L-förmigen Ausnehmungen bestehen aus einem Querschlitz, der senkrecht zur Drehachse verläuft, und einem Verbindungsschlitz, der parallel zur Drehachse verläuft und den Querschlitz mit einer Unterkante des inneren Steckelementes verbindet. Das Steckelement des Bohrschaftabschnittes ist im Bereich der Verbindungsschlitze offen ausgebildet. Die Stiftelemente, die am Schneidabschnitt befestigt sind, werden über den Verbindungsschlitz eingeführt.

Ein Nachteil des bekannten Schneidabschnittes zeigt sich, wenn sich der Schneidabschnitt im Untergrund verklemmt hat. Beim Kernbohren kommt es regelmäßig dazu, dass sich der Schneidabschnitt während des Bohrens im Untergrund verklemmt und vom Bediener gelöst werden muss. Zum Lösen des verklemmten Schneidabschnittes wird bei ständergeführten Kernbohrgeräten die Bohrkrone entgegen der Drehrichtung angetrieben und vom Bohrständer eine Zugkraft, die der Bohrrichtung entgegen gerichtet ist, auf die Bohrkrone ausgeübt. Der Bediener versucht den Schneidabschnitt durch manuelles Drehen mit Hilfe eines Werkzeugschlüssels und gleichzeitiges Ziehen mit Hilfe des Bohrständers aus dem Untergrund zu befreien. Bei den L-förmigen Ausnehmungen des bekannten Schneidabschnittes besteht die Gefahr, dass der Bediener den Bohrschaftabschnitt um die Drehachse dreht, bis das Stiftelement am Verbindungsschlitz anschlägt, und gleichzeitig das Handrad des Bohrständers betätigt, so dass das Stiftelement aus dem Verbindungsschlitz bewegt wird. Sobald die Steck-Dreh-Verbindung zwischen Schneidabschnitt und Bohrschaftabschnitt gelöst ist, muss der Schneidabschnitt anderweitig aus dem Untergrund befreit werden, beispielsweise durch Abtragen des Untergrundes.

JP 59-105311 offenbart einen bekannten Schneidabschnitt mit einem Ringabschnitt, mehreren Schneidelementen, die am Ringabschnitt befestigt sind, und einem Steckelement, das mit dem Ringabschnitt verbunden ist. Das Steckelement weist mehrere schlitzförmige Ausnehmungen in L-Form mit einem Querschlitz und einem Verbindungsschlitz auf, wobei der Querschlitz senkrecht zur Drehachse des Schneidabschnittes angeordnet ist und über den Verbindungsschlitz mit einer Oberkante des Steckelementes verbunden ist. Am Übergang vom Ringabschnitt zum Steckelement befindet sich eine ringförmige Anschlagschulter, die den Ringabschnitt und das Steckelement voneinander abgrenzt.

JP 2002 120218 A offenbart einen weiteren bekannten Schneidabschnitt mit einem Ringabschnitt, mehreren Schneidelementen, die am Ringabschnitt befestigt sind, und einem Steckelement, das mit dem Ringabschnitt verbunden ist, wobei sich am Übergang vom Ringabschnitt zum Steckelement eine ringförmige Anschlagschulter befindet. Das Steckelement weist eine schlitzförmige Ausnehmung mit einem schrägverlaufenden Querschlitz und einem Verbindungsschlitz auf.

### Darstellung der Erfindung

Die Aufgabe der vorliegenden Erfindung besteht darin, einen austauschbaren Schneidabschnitt für ein Bohrkrone zu entwickeln, bei dem das Risiko reduziert ist, dass sich beim Entfernen einer verklemmten Bohrkrone aus dem Untergrund die Verbindung unbeabsichtigt öffnet und der Bohrschaftabschnitt ohne den Schneidabschnitt aus dem Untergrund entfernt wird. Außerdem sollen die Stabilität des Schneidabschnittes beim Bohren und die Standfestigkeit des Schneidabschnittes gegenüber einer Zugbelastung durch einen Bohrständer erhöht sein.

Diese Aufgabe wird bei dem eingangs genannten Schneidabschnitt erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass sich die mindestens eine schlitzförmige Ausnehmung von der äußeren Mantelfläche zur inneren Mantelfläche erstreckt und das Steckelement eine Nut aufweist, die in einer Richtung parallel zur Drehachse auf Höhe der schlitzförmigen Ausnehmungen angeordnet ist.

Die Nut kann mit einer Nase, die am Steckelement eines Bohrschaftabschnittes angebracht ist, in axialer Richtung (Richtung parallel zur Drehachse) eine formschlüssige Verbindung bilden. Durch die zusätzliche formschlüssige Verbindung zwischen dem Bohrschaftabschnitt und dem Schneidabschnitt kann das Risiko weiter reduziert werden, dass sich die lösbare Verbindung zwischen dem Bohrschaftabschnitt und dem Schneidabschnitt beim Entfernen einer verklemmten Bohrkrone aus dem Untergrund unbeabsichtigt öffnet.

Zwischen den schlitzförmigen Ausnehmungen des Steckelementes entstehen Abschnitte, die eine federnde Wirkung zeigen. Über die Anzahl und axiale Höhe der schlitzförmigen Ausnehmungen und die Länge des Steckelementes kann die federnde Wirkung eingestellt werden. Um den Bohrschaftabschnitt vom Schneidabschnitt zu trennen, wird auf die Stirnfläche des Steckelementes mit Hilfe eines Werkzeuges in axialer Richtung eine Kraft ausgeübt. Durch die Krafteinwirkung wird der federnde Abschnitt des Steckelementes ausgelenkt und die formschlüssige Verbindung zwischen Nase und Nut kann gelöst werden.

Der Bohrkronenabschnitt, der die schlitzförmigen Ausnehmungen aufweist, ist anfälliger gegenüber einer Verformung durch Zugbelastung als der Bohrkronenabschnitt, an dem die Stiftelemente befestigt sind. Die Anordnung der schlitzförmigen Ausnehmungen am austauschbaren Schneidabschnitt hat den Vorteil, dass der instabilere Bohrkronenabschnitt ausgetauscht wird. Der erfindungsgemäße Schneidabschnitt weist eine höhere Stabilität und Standfestigkeit gegenüber Zugbelastung auf.

Bevorzugt weist das Steckelement drei oder mehr schlitzförmige Ausnehmungen auf. Dabei sind die schlitzförmigen Ausnehmungen bevorzugt gleichmäßig um die Drehachse des Schneidabschnittes verteilt angeordnet. Durch die gleichmäßige Verteilung der schlitzförmigen Ausnehmungen ist keine Zuordnung zwischen den Stiftelementen und den Ausnehmungen gegeben und ein Stiftelement kann in jede Ausnehmung eingeführt werden.

In einer bevorzugten Ausführung weist das Steckelement senkrecht zur Drehachse einen Außen- und Innendurchmesser auf und erstreckt sich parallel zur Drehachse über eine Länge. Das ringförmige Steckelement ermöglicht die Ausbildung einer Steckverbindung mit einem inneren Steckelement und einem äußeren Steckelement. Das innere Steckelement ist bevorzugt am Bohrschaftabschnitt und das äußere Steckelement am Schneidabschnitt vorgesehen. Durch die Anordnung der schlitzförmigen Ausnehmungen am äußeren Steckelement und die Anordnung der Stiftelemente am inneren Steckelement kann die Bohrkrone an der Innenseite dicht ausgebildet und die Fehlleitung eines Kühl- und Spülmediums verhindert werden. Das beispielsweise über das Einsteckende der Bohrkrone zugeführte Kühl- und Spülmedium strömt bei einer dichten Bohrkrone vollständig an die Bearbeitungsstelle und sorgt für eine Kühlung der Schneidelemente und einen Abtransport von Bohrklein. Der erfindungsgemäße Schneidabschnitt ermöglicht außerdem, dass der Bediener das Öffnen und Schließen der Steck-Dreh-Verbindung überwachen kann. Diese Überwachung ist nicht möglich oder nur eingeschränkt möglich, wenn die schlitzförmigen Ausnehmungen am inneren Steckelement vorgesehen sind.

Besonders bevorzugt beträgt die Länge des Steckelementes mindestens 18 mm. Bei einer Mindestlänge von 18 mm für das Steckelement ist eine ausreichende Standfestigkeit des Schneidabschnittes sichergestellt. Die schlitzförmigen Ausnehmungen lassen sich am Steckelement in einer Höhe positionieren, dass der Schneidabschnitt standfest gegenüber den auftretenden Zugbelastungen beim Lösen einer verklemmten Bohrkrone mit Hilfe eines Bohrständers ist.

Dabei ist die Länge des Steckelementes besonders bevorzugt nicht grösser als 28 mm. Bis zu einer Länge von 28 mm für das Steckelement wird die Standfestigkeit des Schneidabschnittes gegenüber einer Zugbelastung verbessert. Größere Längen für das Steckelement haben keinen oder nur einen geringen Einfluss auf die Standfestigkeit des Schneidabschnittes gegenüber einer Zugbelastung und führen lediglich zu erhöhten Material- und Bearbeitungskosten.

Bevorzugt weist der Querschlitz parallel zur Drehachse einen unteren Abstand zum Ringabschnitt von mindestens 3 mm auf. Bei einem Mindestabstand von 3 mm ist eine ausreichende Standfestigkeit des Schneidabschnittes gegenüber einer Zugbelastung beim Lösen einer verklemmten Bohrkrone mit Hilfe eines Bohrständers sichergestellt.

Dabei ist der untere Abstand des Querschlitzes zum Ringabschnitt besonders bevorzugt nicht grösser als 5 mm. Bis zu einem Abstand von 5 mm wird die Standfestigkeit des Schneidabschnittes gegenüber einer Zugbelastung verbessert. Größere Abstände haben keinen oder nur einen geringen Einfluss auf die Standfestigkeit des Schneidabschnittes gegenüber einer Zugbelastung und führen lediglich zu erhöhten Material- und Bearbeitungskosten.

In einer Weiterentwicklung des Schneidabschnittes weist der Querschlitz einen Mitnahmebereich und einen Sicherungsbereich auf, wobei der Mitnahmebereich auf einer, der Drehrichtung zugewandten, Seite des Verbindungsschlitzes mit dem Verbindungsschlitz verbunden ist und der Sicherungsbereich auf einer, der Drehrichtung abgewandten, Seite des Verbindungsschlitzes mit dem Verbindungsschlitz verbunden ist. Die Drehmomentübertragung vom Bohrschaftabschnitt auf den Schneidabschnitt erfolgt über die Stiftelemente und den Mitnahmebereich. Auf der, dem Mitnahmebereich gegenüberliegenden, Seite des Verbindungsschlitzes ist der Sicherungsbereich angeordnet. Der Sicherungsbereich reduziert das Risiko, dass beim Lösen eines verklemmten Schneidabschnittes aus dem Untergrund die Steck-Dreh-Verbindung zwischen dem Bohrschaftabschnitt und dem Schneidabschnitt unbeabsichtigt geöffnet wird. Der Bediener versucht den verklemmten Schneidabschnitt durch Drehen des Bohrschaftabschnittes mit Hilfe eines Werkzeugschlüssels um die Drehachse und gleichzeitiges Ziehen mit Hilfe des Bohrständers aus dem Untergrund zu befreien. Die Praxis hat gezeigt, dass Bediener vor allem dann am Bohrschaftabschnitt ziehen, wenn das Stiftelement am Querschlitz anschlägt. Wenn das Stiftelement am Mitnahmebereich oder am Sicherungsbereich anschlägt, besteht keine Gefahr, dass die Steck-Dreh-Verbindung geöffnet wird. Bei dem erfindungsgemäßen Schneidabschnitt wird die Steck-Dreh-Verbindung nur dann geöffnet, wenn der Bediener genau in dem Moment am Bohrschaftabschnitt zieht, wenn sich das Stiftelement über dem Verbindungsschlitz befindet. Das Risiko, die Steck-Dreh-Verbindung unbeabsichtigt zu öffnen, ist gegenüber schlitzförmigen Ausnehmungen in L-Form deutlich reduziert.

In einer ersten bevorzugten Variante stimmen die erste Breite des Mitnahmebereiches und die zweite Breite des Sicherungsbereiches überein. Dabei weisen der Mitnahmebereich und der Sicherungsbereich bevorzugt eine Mindestbreite von Stiftradius plus 1.5 mm und eine Maximalbreite von Stiftradius plus 3 mm auf. Diese Ausführung bietet sich vor allem für Schneidabschnitte mit großen Durchmessern an, bei denen der Anteil der Querschlitze am Umfang klein ist.

In einer zweiten bevorzugten Variante ist die erste Breite des Mitnahmebereiches grösser als die zweite Breite des Sicherungsbereiches. Dabei weisen der Mitnahmebereich und der Sicherungsbereich bevorzugt eine Mindestbreite von Stiftradius plus 1.5 mm und eine Maximalbreite von Stiftradius plus 3 mm auf. Diese Ausführung bietet sich vor allem für Schneidabschnitte mit kleinen Durchmessern an, bei denen der Anteil der Querschlitze am Umfang groß ist.

Bevorzugt beträgt die Höhe des Verbindungsschlitzes parallel zur Drehachse des Schneidabschnittes mindestens 10 mm. Bei einer Höhe von mindestens 10 mm ist eine ausreichende Standfestigkeit des Schneidabschnittes gegenüber einer Zugbelastung durch einen Bohrständer sichergestellt.

Dabei ist die Höhe des Verbindungsschlitzes parallel zur Drehachse besonders bevorzugt nicht grösser als 13 mm. Bis zu einer Höhe von 13 mm wird die Standfestigkeit des Schneidabschnittes gegenüber einer Zugbelastung durch einen Bohrständer verbessert. Größere Höhen haben keinen oder nur einen geringen Einfluss auf die Standfestigkeit des Schneidabschnittes gegenüber einer Zugbelastung durch einen Bohrständer und führen lediglich zu erhöhten Material- und Bearbeitungskosten.

In einer Weiterentwicklung des Schneidabschnittes weist der Ringabschnitt einen Führungsabschnitt auf, wobei der Führungsabschnitt parallel zur Drehachse bündig an eine Außenkante, eine Innenkante oder an eine Außen- und Innenkante der Schneidelemente anschließt. Durch den bündigen Anschluss des Führungsabschnittes an die Schneidelemente bildet der Führungsabschnitt beim Bohren eine Führung für die Schneidelemente und stabilisiert die Schneidelemente. Dabei kann die Führung an der Außenseite des Schneidabschnittes über den, das Bohrloch umgebenden Untergrund oder an der Innenseite des Schneidabschnittes über den Bohrkern erfolgen.

Bevorzugt ist die Länge des Führungsabschnittes parallel zur Drehachse kleiner als 4 mm. Ein Führungsabschnitt, der kleiner als 4 mm ist, behindert die Zufuhr eines Kühl- und Spülmediums nicht oder zumindest nicht wesentlich.

Besonders bevorzugt ist die Nut ringförmig ausgebildet und in einer Ebene senkrecht zur Drehachse angeordnet. Eine ringförmig ausgebildete Nut, die auf Höhe der schlitzförmigen Ausnehmungen angeordnet ist, unterstützt die federnde Wirkung der Abschnitte des äußeren Steckelementes zwischen den schlitzförmigen Ausnehmungen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den

Rahmen der Erfindung alle Kombinationen aus zumindest zwei der in der Beschreibung, der Zeichnung und/oder den Ansprüchen offenbarten Merkmale, insofern sich die Merkmale nicht widersprechen und soweit der Schutzumfang der unabhängigen Ansprüche nicht verlassen wird.

Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: einen Schneidabschnitt nicht Teil der Erfindung, der über eine lösbare Steck-Dreh-Verbindung mit einem Bohrschaftabschnitt verbindbar ist, im nicht-verbundenen Zustand (FIG. 1A) und im verbundenen Zustand (FIG. 1B);
- FIGN. 2A, B: den Schneidabschnitt in einem Längsschnitt entlang der Schnittebene A-A in FIG. 1A (FIG. 2A) und das Steckelement des Schneidabschnittes in vergrößerter Darstellung (FIG. 2B);
- FIG. 3: den Schneidabschnitt in einem Längsschnitt entlang der Schnittebene B-B in FIG. 1;

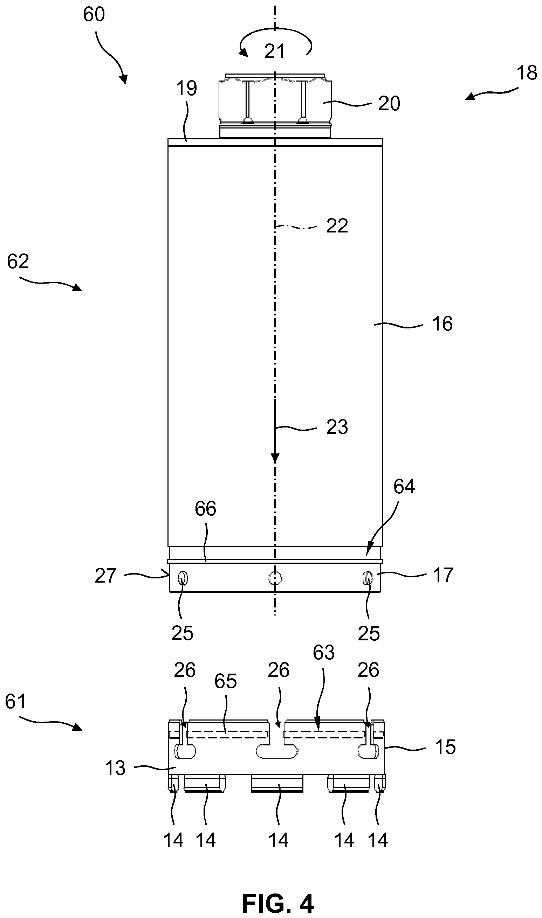

- FIG. 4: einen erfindungsgemäßen Schneidabschnitt, der über eine zusätzliche formschlüssige Verbindung mit einem Bohrschaftabschnitt verbindbar ist.

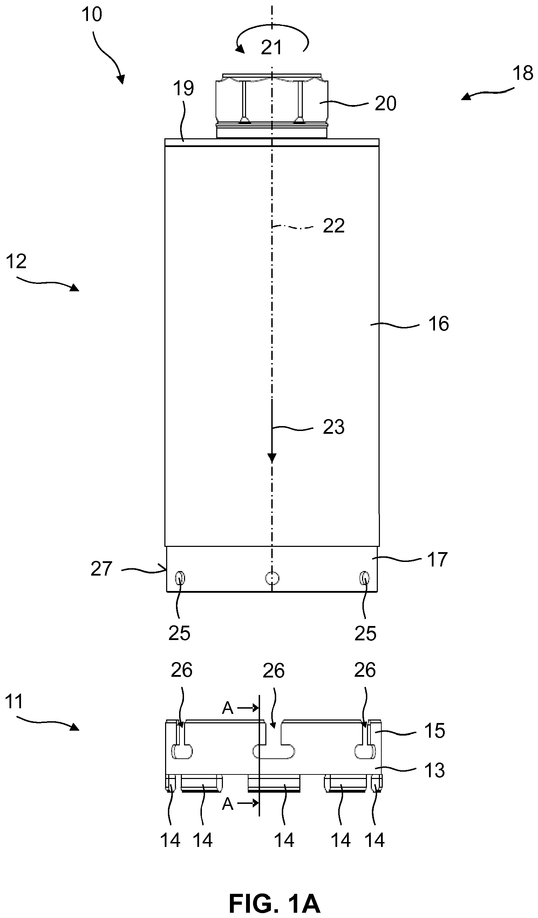

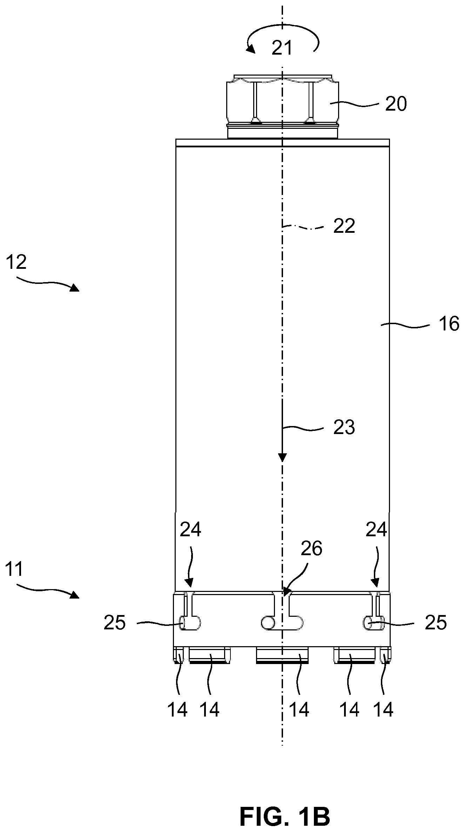

**FIGN. 1A****, B** zeigen eine Bohrkrone **10** bestehend aus einem Schneidabschnitt **11,** der über eine lösbare Steck-Dreh-Verbindung mit einem Bohrschaftabschnitt **12** verbindbar ist. Dabei zeigt FIG. 1A den Schneidabschnitt 11 und den Bohrschaftabschnitt 12 im nicht-verbundenen Zustand mit geöffneter Steck-Dreh-Verbindung und FIG. 1B den Schneidabschnitt 11, der über die Steck-Dreh-Verbindung mit dem Bohrschaftabschnitt 12 verbunden ist.

Der Schneidabschnitt 11 umfasst einen Ringabschnitt **13,** der an einem ersten Ende mit mehreren Schneidelementen **14** verbunden ist und an einem zweiten Ende ein erstes Steckelement **15** aufweist. Dabei ist das erste Steckelement als äußeres Steckelement 15 ausgebildet. Die Schneidelemente 14 sind mit dem Ringabschnitt 13 verschweißt, verlötet, verschraubt oder in einer anderen geeigneten Befestigungsart am Ringabschnitt 13 befestigt. Der Schneidabschnitt 11 kann anstatt mehrerer Schneidelemente 14 auch ein einzelnes als Schneidhülse ausgebildetes Schneidelement aufweisen, das mit dem Ringabschnitt 13 verbunden ist. Der Schneidabschnitt 11 weist senkrecht zur Drehachse 22 einen kreisförmigen Querschnitt auf, alternativ können erfindungsgemäße Schneidabschnitte andere geeignete Querschnitte, wie beispielsweise einen mehreckigen Querschnitt, aufweisen.

Der Bohrschaftabschnitt 12 umfasst einen zylinderförmigen Bohrschaft **16,** der an einem, dem Schneidabschnitt 11 zugewandten, Ende ein zweites Steckelement **17** aufweist und an einem, dem Schneidabschnitt 11 abgewandten, Ende mit einem Aufnahmeabschnitt **18** verbunden ist. Dabei ist das zweite Steckelement als inneres Steckelement 17 ausgebildet. Der Aufnahmeabschnitt 18 umfasst einen Deckel **19** und ein Einsteckende **20.** Die Bohrkrone 10 wird über das Einsteckende 20 in der Werkzeugaufnahme eines Kernbohrgerätes befestigt. Im Bohrbetrieb wird die Bohrkrone 10 vom Kernbohrgerät in einer Drehrichtung **21** um eine Drehachse **22** angetrieben und in einer Bohrrichtung **23** parallel zur Drehachse 22 in den zu bearbeitenden Untergrund bewegt. Die Drehachse 22 verläuft im Bohrbetrieb koaxial zu einer Längsachse des Bohrschaftabschnittes 12 und einer Längsachse des Schneidabschnittes 11.

Der Schneidabschnitt 11 ist über eine Steck-Dreh-Verbindung **24** mit dem Bohrschaftabschnitt 12 verbunden (FIG. 1B). Als "Steck-Dreh-Verbindung" werden Verbindungen von zwei Verbindungselementen bezeichnet, die in mindestens einer Richtung eine Steckverbindung bilden, wobei die gesteckten Verbindungselemente zusätzlich über eine Drehverbindung verbunden werden. Dabei können die Steckverbindung und die Drehverbindung nacheinander oder gleichzeitig geschlossen werden.

Der Schneidabschnitt 11 wird mit dem äußeren Steckelement 15 auf das innere Steckelement 17 des Bohrschaftabschnittes 12 gesteckt, wobei die Steckrichtung der Steckverbindung parallel zur Drehachse 22 verläuft. Die Drehverbindung umfasst sechs Stiftelemente **25,** die in sechs schlitzförmige Ausnehmungen **26** eingeführt werden. Die sechs Stiftelemente 25 sind an der Außenseite **27** des inneren Steckelementes 17 befestigt und die sechs schlitzförmigen Ausnehmungen 26 sind im äußeren Steckelement 15 vorgesehen. Die Stiftelemente 25 und die Ausnehmungen 26 sind gleichmäßig um die Drehachse 22 verteilt angeordnet. Durch die gleichmäßige Verteilung ist keine Zuordnung zwischen den Stiftelementen 25 und den Ausnehmungen 26 gegeben und ein Stiftelement 25 kann in jede Ausnehmung 26 eingeführt werden.

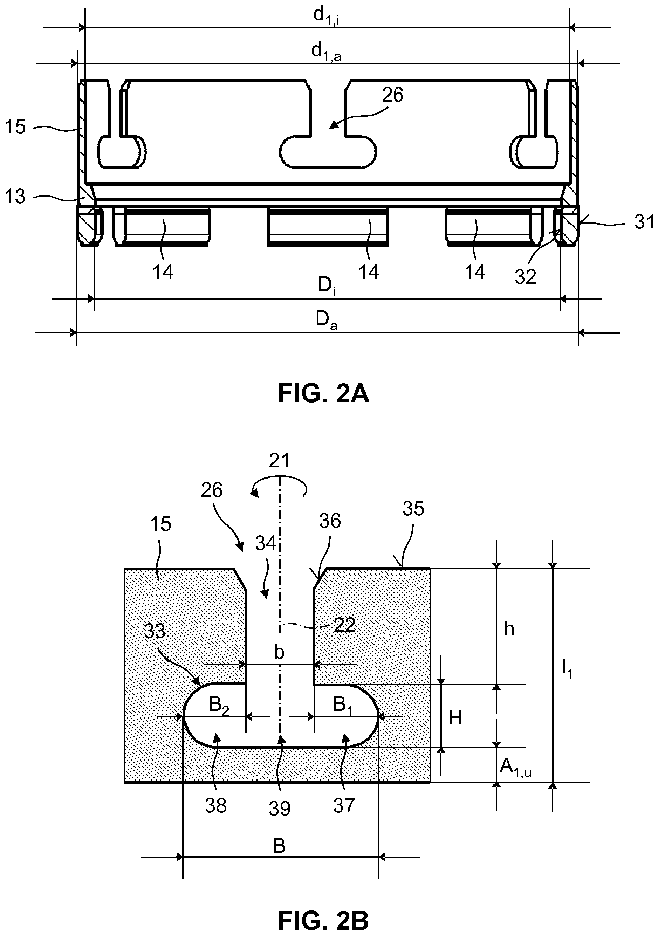

**FIGN. 2A****, B** zeigen den Schneidabschnitt 11 in einem Längsschnitt parallel zur Zeichenebene von FIG. 1A. Dabei zeigt FIG. 2A den gesamten Schneidabschnitt 11 und FIG. 2B eine schlitzförmige Ausnehmung 26 im äußeren Steckelement 15 in einer vergrößerten Darstellung.

Der Schneidabschnitt 11 umfasst den Ringabschnitt 13, die Schneidelemente 14 und das äußere Steckelement 15. Der Ringabschnitt 13 und das äußere Steckelement 15 sind in der gezeigten Ausführung monolithisch ausgebildet. Alternativ zur monolithischen Ausbildung kann das äußere Steckelement 15 als separates Teil ausgebildet sein und anschließend mit dem Ringabschnitt 13 verbunden werden. Die Schneidelemente 14 sind in einer Ebene senkrecht zur Drehachse 22 ringförmig um den Ringabschnitt 13 angeordnet und weisen jeweils eine Außenkante **31** und eine Innenkante **32** auf. Die Außenkanten 31 der Schneidelemente 14 bilden einen Aussenkreis mit einem Außendurchmesser **Dₐ** und die Innenkanten 42 bilden einen Innenkreis mit einem Innendurchmesser **Dᵢ.** Das äußere Steckelement 15 weist senkrecht zur Drehachse 22 einen Außendurchmesser **d_{1,a}** und einen Innendurchmesser **d_{1,i}** auf.

FIG. 2B zeigt eine schlitzförmige Ausnehmung 26 im äußeren Steckelement 15 in vergrößerter Darstellung. Die schlitzförmige Ausnehmung 26 besteht aus einem Querschlitz **33,** der senkrecht zur Drehachse 22 angeordnet ist, und einem Verbindungsschlitz **34,** der parallel zur Drehachse 22 angeordnet ist. Der Verbindungsschlitz 34 verbindet den Querschlitz 33 mit einer Oberkante **35** des äußeren Steckelementes 15, das an der Oberkante 35 im Bereich des Verbindungsschlitzes 34 offen ausgebildet ist. Die Stiftelemente 25 des Bohrschaftabschnittes 12 werden über den Verbindungsschlitz 34 in die schlitzförmige Ausnehmung 26 eingeführt und durch eine Drehung um die Drehachse 22 in den Querschlitz 33 verschoben. Die Drehmomentübertragung vom Stiftelement 25 auf das äußere Steckelement 15 erfolgt im Querschlitz 33.

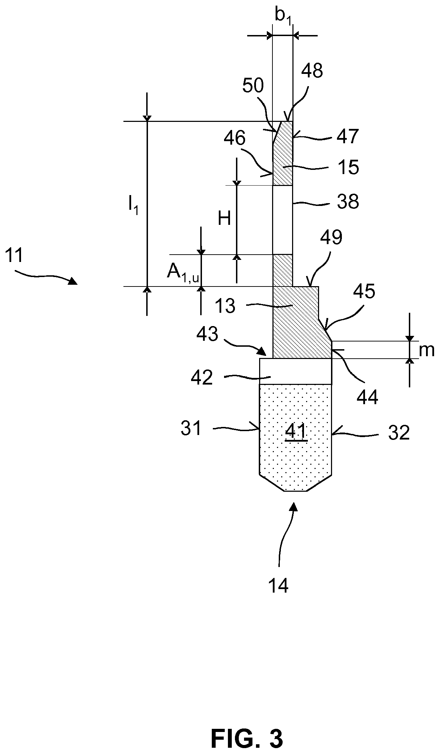

Das äußere Steckelement 15 weist parallel zur Längsachse 22 eine Länge **l₁** und senkrecht zur Längsachse 22 eine Breite **b₁** (FIG. 3) auf. Der Querschlitz 33 weist senkrecht zur Längsachse 22 eine Breite **B** und parallel zur Längsachse 22 eine Höhe **H** auf. Der Verbindungsschlitz 34 weist senkrecht zur Längsachse 22 eine Breite **b** und parallel zur Längsachse 22 eine Höhe **h** auf. Die Breite b des Verbindungsschlitzes 34 ist grösser als der Stiftdurchmesser der Stiftelemente 25, so dass sich die Stiftelemente 25 leicht in den Verbindungsschlitz 34 einführen lassen. Dabei kann das Einführen der Stiftelemente 25 durch eine Einführschräge **36** an der Oberkante 35 erleichtert werden. Die Höhe h des Verbindungsschlitzes 34 wird so gewählt, dass der Schneidabschnitt 11 gegenüber Zugbelastungen beim Lösen einer verklemmten Bohrkrone eine ausreichende Standfestigkeit aufweist. Wird die Höhe h zu gering gewählt, besteht das Risiko einer Verformung des äußeren Steckelementes 15.

Der Querschlitz 33 weist parallel zur Längsachse 22 einen unteren Abstand **A_{1,u}** zum Ringabschnitt 13 und einen oberen Abstand zur Oberkante 35 auf, wobei der obere Abstand der Höhe h des Verbindungsschlitzes 34 entspricht. Der untere Abstand A_{1,u} zum Ringabschnitt 13 wird so gewählt, dass der Schneidabschnitt 11 gegenüber Zugbelastungen durch einen Bohrständer eine ausreichende Standfestigkeit aufweist. Wird der untere Abstand A_{1,u} zu gering gewählt, besteht das Risiko einer Verformung des äußeren Steckelementes 15.

Der Querschlitz 33 umfasst einen Mitnahmebereich **37,** einen Sicherungsbereich **38** und einen Übergangsbereich **39.** Der Mitnahmebereich 37 und der Sicherungsbereich 38 sind bezogen auf die Drehrichtung 21 des Schneidabschnittes 11 auf verschiedenen Seiten des Verbindungsschlitzes 34 angeordnet, wobei der Mitnahme- und Sicherungsbereich 37, 38 über den Übergangsbereich 39 mit dem Verbindungsschlitz 34 verbunden sind. Der Mitnahmebereich 37 ist auf der, der Drehrichtung 21 zugewandten, Seite des Verbindungsschlitzes 34 mit dem Verbindungsschlitz 34 verbunden und der Sicherungsbereich 38 ist auf der, der Drehrichtung 21 abgewandten, Seite des Verbindungsschlitzes 34 mit dem Verbindungsschlitz 34 verbunden. Die Drehmomentübertragung vom Bohrschaftabschnitt 12 auf den Schneidabschnitt 11 erfolgt über die Stiftelemente 25 und den Mitnahmebereich 37. Der Sicherungsbereich 38 reduziert das Risiko, dass beim Lösen einer verklemmten Bohrkrone aus dem Untergrund die Steck-Dreh-Verbindung 24 zwischen dem Bohrschaftabschnitt 12 und dem Schneidabschnitt 11 unbeabsichtigt geöffnet wird.

Der Mitnahmebereich 37 weist senkrecht zur Längsachse 22 eine erste Breite **B₁** auf, die Höhe des Mitnahmebereiches 37 entspricht der Höhe H des Querschlitzes 33. Der Sicherungsbereich 38 weist senkrecht zur Längsachse 22 eine zweite Breite B₂ auf, die Höhe des Sicherungsbereiches 38 entspricht der Höhe H des Querschlitzes 33. Die erste und zweite Breite B₁, B₂ des Mitnahmebereiches 37 bzw. des Sicherungsbereiches 38 werden so gewählt, dass die Stiftelemente 25 bei einer Zugbelastung im Querschlitz 33 gehalten werden und nicht ausbrechen.

**FIG. 3** zeigt den Schneidabschnitt 11 in einem Längsschnitt entlang der Schnittebene A-A in FIG. 1A. Der Schneidabschnitt 11 umfasst den Ringabschnitt 13, die Schneidelemente 14 und das äußere Steckelement 15.

Die Schneidelemente 14 sind aus einer Matrixzone **41** und einer Neutralzone **42** aufgebaut, wobei die Matrixzone 41 aus einem mit Schneidpartikeln versetzten Pulverwerkstoff und die Neutralzone 42 aus einem schweißbaren Pulverwerkstoff ohne Schneidpartikel besteht. Der zweiteilige Aufbau der Schneidelemente 14 ist erforderlich, um die Schneidelemente 14 mit dem Ringabschnitt 13 verschweißen zu können. Der Ringabschnitt 13 schließt bündig an die Innenkante 32 des Schneidelementes 14 an und weist gegenüber der Außenkante 31 des Schneidelementes 14 einen Rücksprung **43** auf.

Der Ringabschnitt 13 umfasst an der Innenseite einen Führungsabschnitt **44** und einen Kernentfernungsabschnitt **45.** Der Kernentfernungsabschnitt 45 weist einen Innendurchmesser auf, der in Richtung der Schneidelemente 14 abnimmt, die schräge Fläche des Kernentfernungsabschnittes 45 unterstützt das Entfernen des Bohrkerns. Der Führungsabschnitt 44 schließt bündig an das Schneidelement 14 an und bildet beim Bohren eine Führung für die Schneidelemente 14, parallel zur Längsachse 22 weist der Führungsabschnitt 44 eine Länge **m** auf. Alternativ zur Führung an der Innenseite der Bohrkrone 10 kann der Führungsabschnitt an der Außenseite oder an der Außen- und Innenseite angeordnet sein. Die Länge m des Führungsabschnittes 44 ist kleiner als 4 mm. Ein Führungsabschnitt 44, der kleiner als 4 mm ist, behindert die Zufuhr eines Kühl- und Spülmediums nicht oder zumindest nicht wesentlich.

Das äußere Steckelement 15 umfasst eine äußere Mantelfläche **46,** eine innere Mantelfläche **47** und eine Stirnfläche **48.** Am Übergang vom Ringabschnitt 13 zum äußeren Steckelement 15 befindet sich eine ringförmige Anschlagschulter **49.** Bei dem in FIG. 3 gezeigten Schneidabschnitt 11 weist das äußere Steckelement 15 zusätzlich eine schräge Außenfläche 50 auf, deren Durchmesser in Richtung der Schneidelemente 14 zunimmt.

FIG. 5 zeigt eine weitere Bohrkrone **60** bestehend aus einem erfindungsgemäßen Schneidabschnitt **61,** der über eine lösbare Steck-Dreh-Verbindung mit einem Bohrschaftabschnitt **72** verbindbar ist. Die Bohrkrone 60 unterscheidet sich von der Bohrkrone 10 dadurch, dass in axialer Richtung eine zusätzliche formschlüssige Verbindung vorgesehen ist, die ein unbeabsichtigtes Lösen des Schneidabschnittes 61 vom Bohrschaftabschnitt 62 erschwert.

Der Schneidabschnitt 61 weist neben dem äußeren Steckelement 15 und den schlitzförmigen Ausnehmungen 26 ein erste Verbindungseinrichtung **63** auf und der Bohrschaftabschnitt 62 weist neben dem inneren Steckelement 17 und den Stiftelementen 25 eine zweite Verbindungseinrichtung **64** auf. Die erste Verbindungseinrichtung 63 umfasst eine Nut **65,** die an der Innenseite 47 des äußeren Steckelementes 15 angeordnet ist. Die zweite Verbindungseinrichtung 64 umfasst eine Nase **66,** die am inneren Steckelement 17 angeordnet ist und sich radial nach außen erstreckt. Im verbundenen Zustand der Bohrkrone 60 bilden die Nase 66 und Nut 65 in axialer Richtung d.h. in Bohrrichtung 23, eine formschlüssige Verbindung zwischen dem Schneidabschnitt 61 und dem Bohrschaftabschnitt 62. Der Schneidabschnitt 61 ist mittels der Nase 66 und Nut 65 gegen ein Abziehen des Bohrschaftabschnittes 62 vom Schneidabschnitt 61 gesichert.

Die Nase 66 ist in axialer Richtung zwischen den Stiftelementen 25 und dem Bohrschaft 16 angeordnet. Um den Bohrschaftabschnitt 62 vom Schneidabschnitt 61 zu entfernen, wird auf die Stirnfläche des äußeren Steckelementes 15 mit Hilfe eines Werkzeuges eine Kraft ausgeübt. Durch die Krafteinwirkung wird der federnde Abschnitt des äußeren Steckelementes 15 ausgelenkt und die formschlüssige Verbindung zwischen Nase 66 und Nut 65 kann gelöst werden. Die Nut 65 ist ringförmig ausgebildet und in einer Ebene senkrecht zur Drehachse 22 angeordnet. Eine ringförmig ausgebildete Nut, die in axialer Richtung auf Höhe der schlitzförmigen Ausnehmungen 26 angeordnet ist, unterstützt die Federwirkung der Abschnitte des äußeren Steckelementes 15 zwischen den schlitzförmigen Ausnehmungen 26.

Die Haltekraft, die die Nase 66 und Nut 65 aushalten, kann über die Geometrie der Nase 66 und Nut 65 angepasst werden. Das Einrasten der Nase 66 in die Nut 65 soll für den Bediener möglichst komfortabel sein, eine schräge Fläche erleichtert das Einrasten. Als Geometrieparameter zum Einstellen der Haltekraft eignen sich beispielsweise die radiale Höhe der Nase 66, d.h. die Höhe in radialer Richtung, die Kontaktfläche zwischen der Nase 66 und dem inneren Steckelement 17 und der Neigungswinkel.

## Patentansprüche

1. Schneidabschnitt (61) für eine Bohrkrone, der in einer Drehrichtung (21) um eine Drehachse (22) drehbar ist, aufweisend:
▪ einen Ringabschnitt (13),
▪ ein oder mehrere Schneidelemente (14), die an einem ersten Ende des Ringabschnittes (13) befestigt sind, und
▪ ein Steckelement (15), das an einem, den Schneidelementen (14) abgewandten, Ende mit dem Ringabschnitt (13) verbunden ist und das mindestens eine schlitzförmige Ausnehmung (26) mit einem Querschlitz (33) und einem Verbindungsschlitz (34) aufweist, wobei der Querschlitz (33) senkrecht zur Drehachse (22) angeordnet ist und über den Verbindungsschlitz (34) mit einer Oberkante (35) des Steckelementes (15) verbunden ist,
wobei sich am Übergang vom Ringabschnitt (13) zum Steckelement (15) eine ringförmige Anschlagschulter (49) befindet und das Steckelement (15) eine äußere Mantelfläche (46), eine innere Mantelfläche (47) und eine Stirnfläche (48) umfasst,
**dadurch gekennzeichnet, dass** sich die mindestens eine schlitzförmige Ausnehmung (26) von der äußeren Mantelfläche (46) zur inneren Mantelfläche (47) erstreckt und das Steckelement (15) eine Nut (65) aufweist, die in einer Richtung parallel zur Drehachse (22) auf Höhe der schlitzförmigen Ausnehmungen (26) angeordnet ist.

2. Schneidabschnitt nach Anspruch 1, **dadurch gekennzeichnet, dass** das Steckelement (15) drei oder mehr schlitzförmige Ausnehmungen (26) aufweist.

3. Schneidabschnitt nach Anspruch 1, **dadurch gekennzeichnet, dass** das Steckelement (15) senkrecht zur Drehachse (22) einen Außen- und Innendurchmesser (d_{1,a}, d_{1,i}) aufweist und sich parallel zur Drehachse (22) über eine Länge (l₁) erstreckt.

4. Schneidabschnitt nach Anspruch 3, **dadurch gekennzeichnet, dass** die Länge (l₁) des Steckelementes (15) mindestens 18 mm beträgt.

5. Schneidabschnitt nach Anspruch 4, **dadurch gekennzeichnet, dass** die Länge (l₁) des Steckelementes (15) nicht grösser als 28 mm ist.

6. Schneidabschnitt nach Anspruch 1, **dadurch gekennzeichnet, dass** der Querschlitz (33) parallel zur Drehachse (22) einen unteren Abstand (A_{1,u}) zum Ringabschnitt (13) von mindestens 3 mm aufweist.

7. Schneidabschnitt nach Anspruch 6, **dadurch gekennzeichnet, dass** der untere Abstand (A_{1,u}) des Querschlitzes (33) zum Ringabschnitt (13) nicht grösser als 5 mm ist.

8. Schneidabschnitt nach Anspruch 1, **dadurch gekennzeichnet, dass** der Querschlitz (33) einen Mitnahmebereich (37) und einen Sicherungsbereich (38) aufweist, wobei der Mitnahmebereich (37) auf einer, der Drehrichtung (21) zugewandten, Seite des Verbindungsschlitzes (34) mit dem Verbindungsschlitz (34) verbunden ist und senkrecht zur Drehachse (22) eine erste Breite (B₁) aufweist und der Sicherungsbereich (38) auf einer, der Drehrichtung (21) abgewandten, Seite des Verbindungsschlitzes (34) mit dem Verbindungsschlitz (34) verbunden ist und senkrecht zur Drehachse (22) eine zweite Breite (B₂) aufweist, wobei die Höhe des Mitnahmebereiches (37) der Höhe (H) des Querschlitzes (33) entspricht.

9. Schneidabschnitt nach Anspruch 8, **dadurch gekennzeichnet, dass** die erste Breite (B₁) des Mitnahmebereiches (37) und die zweite Breite (B₂) des Sicherungsbereiches (38) übereinstimmen.

10. Schneidabschnitt nach Anspruch 8, **dadurch gekennzeichnet, dass** die erste Breite (B₁) des Mitnahmebereiches grösser als die zweite Breite (B₂) des Sicherungsbereiches ist.

11. Schneidabschnitt nach Anspruch 1, **dadurch gekennzeichnet, dass** die Höhe (h) des Verbindungsschlitzes (34) parallel zur Drehachse (22) mindestens 10 mm beträgt.

12. Schneidabschnitt nach Anspruch 11, **dadurch gekennzeichnet, dass** die Höhe (h) des Verbindungsschlitzes (34) parallel zur Drehachse (22) nicht grösser als 13 mm ist.

13. Schneidabschnitt nach Anspruch 1, **dadurch gekennzeichnet, dass** der Ringabschnitt (13) einen Führungsabschnitt (44) aufweist, wobei der Führungsabschnitt (44) parallel zur Längsachse (22) bündig an eine Außenkante (31), eine Innenkante (32) oder an eine Außen- und Innenkante (31, 32) der Schneidelemente (14) anschließt.

14. Schneidabschnitt nach Anspruch 13, **dadurch gekennzeichnet, dass** die Länge (m) des Führungsabschnittes (44) parallel zur Drehachse (22) kleiner als 4 mm ist.

15. Schneidabschnitt nach Anspruch 1, **dadurch gekennzeichnet, dass** die Nut (65) ringförmig ausgebildet ist und in einer Ebene senkrecht zur Drehachse (22) angeordnet ist.

## Claims

1. Cutting portion (61) for a drill bit, which is rotatable in a direction of rotation (21) about an axis of rotation (22), comprising:
• a ring portion (13),
• one or more cutting elements (14), which are fastened at a first end of the ring portion (13), and
• a plug-in element (15), which is connected to the ring portion (13) at an end facing away from the cutting elements (14) and has at least one slot-shaped recess (26) with a transverse slot (33) and a connecting slot (34), wherein the transverse slot (33) is arranged perpendicularly to the axis of rotation (22) and is connected to a top edge (35) of the plug-in element (15) via the connecting slot (34),
wherein there is an annular abutment shoulder (49) at the transition from the ring portion (13) to the plug-in element (15) and the plug-in element (15) comprises an outer lateral surface (46), an inner lateral surface (47) and an end face (48),
**characterized in that** the at least one slot-shaped recess (26) extends from the outer lateral surface (46) to the inner lateral surface (47) and the plug-in element (15) has a groove (65) which is arranged at the level of the slot-shaped recesses (26) in a direction parallel to the axis of rotation (22).

2. Cutting portion according to Claim 1, **characterized in that** the plug-in element (15) has three or more slot-shaped recesses (26).

3. Cutting portion according to Claim 1, **characterized in that** the plug-in element (15) has an outside and an inside diameter (d_{1,a}, d_{1,i}) perpendicular to the axis of rotation (22) and extends parallel to the axis of rotation (22) over a length (l₁).

4. Cutting portion according to Claim 3, **characterized in that** the length (l₁) of the plug-in element (15) is at least 18 mm.

5. Cutting portion according to Claim 4, **characterized in that** the length (l₁) of the plug-in element (15) is no more than 28 mm.

6. Cutting portion according to Claim 1, **characterized in that** the transverse slot (33) has a lower spacing (A_{1,u}) to the ring portion (13) parallel to the axis of rotation (22) of at least 3 mm.

7. Cutting portion according to Claim 6, **characterized in that** the lower spacing (A_{1,u}) of the transverse slot (33) to the ring portion (13) is no more than 5 mm.

8. Cutting portion according to Claim 1, **characterized in that** the transverse slot (33) has a driving region (37) and a securing region (38), wherein the driving region (37) is connected to the connecting slot (34) on a side of the connecting slot (34) that faces in the direction of rotation (21) and the driving region has a first width (B₁) perpendicular to the axis of rotation (22), and the securing region (38) is connected to the connecting slot (34) on a side of the connecting slot (34) that faces away from the direction of rotation (21) and the securing slot has a second width (B₂) perpendicular to the axis of rotation (22), wherein the height of the driving region (37) corresponds to the height (H) of the transverse slot (33).

9. Cutting portion according to Claim 8, **characterized in that** the first width (B₁) of the driving region (37) and the second width (B₂) of the securing region (38) correspond.

10. Cutting portion according to Claim 8, **characterized in that** the first width (B₁) of the driving region is greater than the second width (B₂) of the securing region.

11. Cutting portion according to Claim 1, **characterized in that** the height (h) of the connecting slot (34) parallel to the axis of rotation (22) is at least 10 mm.

12. Cutting portion according to Claim 11, **characterized in that** the height (h) of the connecting slot (34) parallel to the axis of rotation (22) is no more than 13 mm.

13. Cutting portion according to Claim 1, **characterized in that** the ring portion (13) has a guide portion (44), wherein the guide portion (44) is connected flush to an outer edge (31), an inner edge (32), or an outer and an inner edge (31, 32) of the cutting elements (14) parallel to the longitudinal axis (22).

14. Cutting portion according to Claim 13, **characterized in that** the length (m) of the guide portion (44) parallel to the axis of rotation (22) is smaller than 4 mm.

15. Cutting portion according to Claim 1, **characterized in that** the groove (65) has an annular form and is arranged in a plane perpendicular to the axis of rotation (22).

## Revendications

1. Partie de coupe (61) pour une couronne de forage qui peut tourner autour d'un axe de rotation (22) dans un sens de rotation (21),
présentant :
▪ une partie annulaire (13),
▪ un ou plusieurs éléments de coupe (14) qui sont fixés à une première extrémité de la partie annulaire (13), et
▪ un élément enfichable (15) qui est relié à la partie annulaire (13) à une extrémité opposée aux éléments de coupe (14) et qui présente au moins un évidement (26) en forme de fente doté d'une fente transversale (33) et d'une fente de liaison (34), la fente transversale (33) étant disposée perpendiculairement à l'axe de rotation (22) et étant reliée à une arête supérieure (35) de l'élément enfichable (15) par le biais de la fente de liaison (34),
un épaulement de butée (49) annulaire se trouvant à la transition de la partie annulaire (13) à l'élément enfichable (15) et l'élément enfichable (15) comprenant une surface d'enveloppe extérieure (46), une surface d'enveloppe intérieure (47) et
une surface frontale (48),
**caractérisée en ce que** l'au moins un évidement (26) en forme de fente s'étend de la surface d'enveloppe extérieure (46) à la surface d'enveloppe intérieure (47) et
l'élément enfichable (15) présente une rainure (65) qui est disposée à hauteur des évidements (26) en forme de fentes dans une direction parallèle à l'axe de rotation (22).

2. Partie de coupe selon la revendication 1, **caractérisée en ce que** l'élément enfichable (15) présente trois évidements (26) en forme de fentes ou plus.

3. Partie de coupe selon la revendication 1, **caractérisée en ce que** l'élément enfichable (15) présente un diamètre intérieur et un diamètre extérieur (d_{1,a}, d_{1,i}) perpendiculairement à l'axe de rotation (22) et s'étend sur une longueur (l₁) parallèlement à l'axe de rotation (22).

4. Partie de coupe selon la revendication 3, **caractérisée en ce que** la longueur (l₁) de l'élément enfichable (15) vaut au moins 18 mm.

5. Partie de coupe selon la revendication 4, **caractérisée en ce que** la longueur (l₁) de l'élément enfichable (15) n'est pas supérieure à 28 mm.

6. Partie de coupe selon la revendication 1, **caractérisée en ce que** la fente transversale (33) présente parallèlement à l'axe de rotation (22) une distance inférieure (A_{1,u}) à la partie annulaire (13) d'au moins 3 mm.

7. Partie de coupe selon la revendication 6, **caractérisée en ce que** la distance inférieure (A_{1,u}) de la fente transversale (33) à la partie annulaire (13) n'est pas supérieure à 5 mm.

8. Partie de coupe selon la revendication 1, **caractérisée en ce que** la fente transversale (33) présente une région d'entraînement (37) et une région de blocage (38), la région d'entraînement (37) étant, sur un côté, tourné vers le sens de rotation (21), de la fente de liaison (34), reliée à la fente de liaison (34) et présentant une première largeur (B₁) perpendiculairement à l'axe de rotation (22) et la région de blocage (38) étant, sur un côté, opposé au sens de rotation (21), de la fente de liaison (34), reliée à la fente de liaison (34) et présentant une deuxième largeur (B₂) perpendiculairement à l'axe de rotation (22), la hauteur de la région d'entraînement (37) correspondant à la hauteur (H) de la fente transversale (33).

9. Partie de coupe selon la revendication 8, **caractérisée en ce que** la première largeur (B₁) de la région d'entraînement (37) et la deuxième largeur (B₂) de la région de blocage (38) coïncident.

10. Partie de coupe selon la revendication 8, **caractérisée en ce que** la première largeur (B₁) de la région d'entraînement est supérieure à la deuxième largeur (B₂) de la région de blocage.

11. Partie de coupe selon la revendication 1, **caractérisée en ce que** la hauteur (h) de la fente de liaison (34) parallèlement à l'axe de rotation (22) vaut au moins 10 mm.

12. Partie de coupe selon la revendication 11, **caractérisée en ce que** la hauteur (h) de la fente de liaison (34) parallèlement à l'axe de rotation (22) n'est pas supérieure à 13 mm.

13. Partie de coupe selon la revendication 1, **caractérisée en ce que** la partie annulaire (13) présente une partie de guidage (44), la partie de guidage (44) se raccordant en affleurement à une arête extérieure (31), une arête intérieure (32) ou à une arête extérieure et une arête intérieure (31, 32) des éléments de coupe (14) parallèlement à l'axe longitudinal (22).

14. Partie de coupe selon la revendication 13, **caractérisée en ce que** la longueur (m) de la partie de guidage (44) parallèlement à l'axe de rotation (22) est inférieure à 4 mm.

15. Partie de coupe selon la revendication 1, **caractérisée en ce que** la rainure (65) est de forme annulaire et est disposée dans un plan perpendiculaire à l'axe de rotation (22).
